# EUROPÄISCHE PATENTANMELDUNG

(11) **EP 2 905 664 A1**
(43) Veröffentlichungstag der Anmeldung: **12.08.2015**
(21) Anmeldenummer: 15152214.1
(22) Anmeldetag: 22.01.2015
(51) Int. Cl.: G05B 19/042

(54) **Türstellglied und Verfahren zur Montage des Türstellgliedes**

(30) Priorität: 11.02.2014 DE 102014101672
(71) Anmelder: DORMA Deutschland GmbH, 58256 Ennepetal (DE)
(72) Erfinder: Kapanski, Kai, 58256 Ennepetal (DE); Gosch, Stephan, 58256 Ennepetal (DE)
(74) Vertreter: Balder IP Law, S.L.

(57) **Zusammenfassung**

Die Erfindung betrifft ein Türstellglied (1), umfassend einen Aktor (2) zum Freigeben, Verriegeln, Schließen und/oder Öffnen einer Tür, zumindest zwei Versorgungsanschlüsse (6), über die der Aktor (2) bestrombar ist, und eine interne Steuereinheit (3), die dazu ausgebildet ist, beim Anschluss des Türstellgliedes (1) an eine externe Steuereinheit (5) einen Bus-Betrieb und einen Analog-Betrieb der externen Steuereinheit (5) zu erkennen, wobei die interne Steuereinheit (3) zum Umschalten des Türstellgliedes (1) zwischen dem Bus-Betrieb und dem Analog-Betrieb ausgebildet ist, wobei im Bus-Betrieb die interne Steuereinheit (3) zum Empfang eines digitalen Signals von der externen Steuereinheit (5) und zum Bestromen des Aktors (2) in Abhängigkeit des digitalen Signals ausgebildet ist, und wobei im Analog-Betrieb die interne Steuereinheit (3) zum ständigen Durchschalten der zwei Versorgungsanschlüsse (6) auf den Aktor (2) oder zum Aktivieren eines Ansteuereingangs (12) für den analogen Betrieb des Aktors (2) ausgebildet ist.

## Beschreibung

Die Erfindung betrifft ein Türstellglied zum Freigeben, Verriegeln, Schließen und/oder Öffnen einer Tür, insbesondere in oder an einem Gebäude. Des Weiteren umfasst die Erfindung ein Verfahren zur Montage des Türstellgliedes.

Türstellglieder im Sinne der Erfindung sind beispielsweise Türöffner, Türschlösser, Türhaftmagneten oder Türantriebe. Türöffner werden innerhalb einer Tür zum Freigeben oder zum Sperren einer Schlossfalle verwendet. Türschlösser verriegeln das Türblatt gegenüber dem Türrahmen. Türhaftmagneten werden zum Offenhalten oder zum Geschlossenhalten eines Türflügels genutzt. Beispielsweise können bestromte Türhaftmagneten einen Türflügel offenhalten. Beim Stromlosschalten des Türhaftmagneten schließt sich der Türflügel. Mit Türantrieben können Türflügel automatisch geöffnet und/oder geschlossen werden.

Türstellglieder können analog betrieben oder über einen Bus angesteuert werden. Im analogen Betrieb erfolgt ein direktes Bestromen des Türstellgliedes und somit ein An- und Ausschalten des Türstellgliedes über die bestromten Versorgungsleitungen oder einen weiteren notwendigen Ansteuereingang. Der analoge Betrieb ermöglicht einfache Manipulation an der Steuerleitung. Zur Erfüllung von höherwertigen Schutzklassen sind Maßnahmen erforderlich, die die einfache Manipulation verhindern. Eine Möglichkeit die Schutzklasse zu erhöhen, ist die Ansteuerung über ein Bustelegramm. Im Bus-Betrieb werden digitale Signale an das Türstellglied übermittelt. In Abhängigkeit dieser digitalen Signale entscheidet das Türstellglied, ob beispielsweise der Aktor im Türstellglied bestromt wird oder nicht. Bei herkömmlichen Türstellgliedern muss der Monteur das entsprechende Türstellglied richtig einstellen, so dass es in gewünschter Weise im analogen Betrieb oder im Bus-Betrieb funktioniert. Alternativ dazu gibt es auch Türstellglieder, die ausschließlich im analogen Betrieb oder im Bus-Betrieb funktionieren. In diesem Fall muss der Monteur das richtige Türstellglied auswählen.

Es ist Aufgabe vorliegender Erfindung, ein Türstellglied anzugeben, das bei kostengünstiger Herstellung sehr einfach montiert und in Betrieb genommen werden kann. Des Weiteren ist es Aufgabe vorliegender Erfindung, ein entsprechendes Verfahren zur Montage des Türstellgliedes anzugeben.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch ein Türstellglied, umfassend einen Aktor. Der Aktor dient zum Freigeben, Verriegeln, Schließen und/oder Öffnen einer Türe. Beispielsweise umfasst der Aktor einen Elektromotor oder einen Elektromagneten. Insbesondere findet das Türstellglied Anwendung in oder an Gebäuden. Das Türstellglied umfasst zumindest zwei Versorgungsanschlüsse. Über diese beiden Versorgungsanschlüsse kann der Aktor im Türstellglied bestromt werden. Des Weiteren umfasst das Türstellglied eine interne Steuereinheit. Diese interne Steuereinheit ist in das Türstellglied integriert. Die interne Steuereinheit ist dazu ausgebildet, beim Anschluss des Türstellgliedes an eine externe Steuereinheit einen Bus-Betrieb und einen Analog-Betrieb zu erkennen. Ferner ist die interne Steuereinheit dazu ausgebildet, das Türstellglied zwischen dem Bus-Betrieb und dem Analog-Betrieb umzuschalten. Im Bus-Betrieb ist die interne Steuereinheit zum Empfang eines digitalen Signals von der externen Steuereinheit und zum Bestromen des Aktors in Abhängigkeit des digitalen Signals ausgebildet. Im Analog-Betrieb schaltet die interne Steuereinheit die beiden Versorgungsanschlüsse direkt auf den Aktor durch oder aktiviert den Ansteuereingang. Im Analog-Betrieb regelt somit die interne Steuereinheit nicht mehr das Aktivieren und Deaktivieren des Aktors. Bei dem erfindungsgemäßen Türstellglied muss der Monteur nicht mehr entscheiden, ob der Aktor im Bus-Betrieb oder im Analog-Betrieb arbeitet. Das erfindungsgemäße Türstellglied erkennt selbstständig die Betriebsweisen. Dadurch ist das Türstellglied sehr flexibel einsetzbar und einfach zu montieren.

Bevorzugt sind zwei weitere Anschlüsse am Türstellglied, insbesondere an der internen Steuereinheit vorgesehen. Über zwei elektrische Anschlussleitungen können diese zwei weiteren Anschlüsse mit der externen Steuereinheit verbunden werden. Die interne Steuereinheit schaltet auf den Bus-Betrieb um, wenn die zwei weiteren Anschlüsse kurzgeschlossen oder über einen Widerstand miteinander verbunden sind. Die beiden elektrischen Anschlussleitungen, die mit den beiden weiteren Anschlüssen des Türstellgliedes verbunden sind, werden also bevorzugt in der externen Steuereinheit kurzgeschlossen oder über einen Widerstand miteinander verbunden. Dadurch kann die interne Steuereinheit den Bus-Betrieb erkennen. Sind die elektrischen Anschlussleitungen über einen Widerstand abgeschlossen, ist eine Manipulation an der Anschlussleitung einfach feststellbar: über den Widerstand wird der Spannungsabfall gemessen und über eine elektronische Schaltung überwacht. Wird ein Referenzwert über- oder unterschritten, können Alarmmeldungen über das externe Steuergerät erzeugt werden. Schutzmechanismen können z. B. bei einer Trennung von der externen Steuerung für einen gewissen Zeitraum verhindern, dass das Stellglied über den Analogen Eingang aktiviert werden kann. (Zeitsperre)

Des Weiteren ist bevorzugt vorgesehen, dass die interne Steuereinheit zum Empfang des digitalen Signals in Form eines Bustelegramms ausgebildet ist. Bei Empfang dieses Bustelegramms von der externen Steuereinheit schaltet die interne Steuereinheit auf den Bus-Betrieb um.

Besonders bevorzugt umfasst das Türstellglied, insbesondere die interne Steuereinheit, zwei Busanschlüsse für elektrische Busleitungen. Diese elektrischen Busleitungen führen zur externen Steuereinheit. Die interne Steuereinheit ist zum Empfang des digitalen Signals, insbesondere auch des Bustelegramms, über diese Busanschlüsse ausgebildet.

Alternativ oder zusätzlich zu den Busanschlüssen können digitale Signale auch über die Versorgungsanschlüsse an die interne Steuereinheit weitergegeben werden. In diesem Fall sind die digitalen Signale auf den Versorgungsstrom aufmoduliert.

Beim Umschalten der internen Steuereinheit auf den Bus-Betrieb ist bevorzugt vorgesehen, dass die interne Steuereinheit eine Buskennung an die externe Steuereinheit sendet. Dadurch wird sichergestellt, dass die externe Steuereinheit die korrekte Arbeitsweise des Türstellgliedes erkennt.

Des Weiteren ist bevorzugt vorgesehen, dass die externe Steuereinheit zyklisch ein Timelife-Telegramm in Form eines digitalen Signals an die interne Steuereinheit sendet, um die Funktionsfähigkeit des Türstellgliedes im Betrieb zu überprüfen. Das Türstellglied sendet als Antwort auf das Timelife-Telegramm Statusmeldungen und/oder seine Betriebsbereitschaft in Form eines digitalen Signals an die externe Steuereinheit. Durch diese Kommunikation können höchste Sicherheitsanforderungen erfüllt werden.

Bei der ersten Inbetriebnahme des Türstellgliedes wird nach Power on das Senden des Bustelegramms von der externen Steuereinheit an die interne Steuereinheit abgefragt. Bleibt eine entsprechende Antwort länger aus, beispielsweise länger als 8 Sekunden, wird davon ausgegangen, dass im Analog-Betrieb gearbeitet wird und der analoge Steuereingang wird aktiviert.

Findet bei der Erstinbetriebnahme ein Austausch von Bustelegrammen statt, wird der analoge Steuereingang deaktiviert und ausschließlich Bustelegramme werden zur Ansteuerung des Türstellgliedes zugelassen. Dieser Zustand wird im Türstellglied gespeichert, so dass ein kurzfristiger Spannungsausfall nicht zur Umstellung auf analoge Betriebsart zur Folge haben kann. Der Speicher soll so ausgelegt sein, dass die Betriebsart so lange gespeichert bleibt, um Manipulationen auszuschließen.

Das Türstellglied ist vorzugsweise als Türöffner oder Türschloss oder Türhaftmagnet oder Türantrieb ausgebildet.

Die Erfindung umfasst des Weiteren eine Anordnung für eine Tür, vorzugsweise zur Verwendung in oder an einem Gebäude, umfassend zumindest eines der soeben beschriebenen Türstellglieder und die externe Steuereinheit.

Des Weiteren umfasst die Erfindung ein Verfahren zur Montage des Türstellgliedes inklusive Aktor, umfassend die folgenden Schritte: (i) Anschließen zumindest zweier Versorgungsanschlüsse des Türstellgliedes, über die der Aktor bestrombar ist, (ii) Anschließen einer internen Steuereinheit des Türstellgliedes an eine externe Steuereinheit, (iii) Erkennen eines Bus-Betriebs der externen Steuereinheit mittels der internen Steuereinheit, und (iv) Umschalten des Türstellgliedes zwischen dem Bus-Betrieb und dem Analog-Betrieb, wobei im Buse-Betrieb die interne Steuereinheit digitale Signale empfängt und den Aktor in Abhängigkeit des digitalen Signals bestromt und wobei im Analog-Betrieb die interne Steuereinheit die zwei Versorgungsanschlüsse ständig auf den Aktor durchschaltet oder einen notwendigen Ansteuereingang für analogen Betrieb aktiviert.

Die vorteilhaften Ausgestaltungen und Unteransprüche des erfindungsgemäßen Türstellgliedes finden entsprechend vorteilhafte Anwendung für das erfindungsgemäße Verfahren.

Die Erfindung wird nun anhand eines Ausführungsbeispiels näher beschrieben. Dabei zeigen:
- Figur 1: eine erfindungsgemäße Anordnung mit einem erfindungsgemäßen Türstellglied gemäß einem ersten Ausführungsbeispiel,
- Figur 2: eine erfindungsgemäße Anordnung mit einem erfindungsgemäßen Türstellglied gemäß einem zweiten Ausführungsbeispiel, und
- Figur 3: eine erfindungsgemäße Anordnung mit einem erfindungsgemäßen Türstellglied gemäß einem dritten Ausführungsbeispiel.

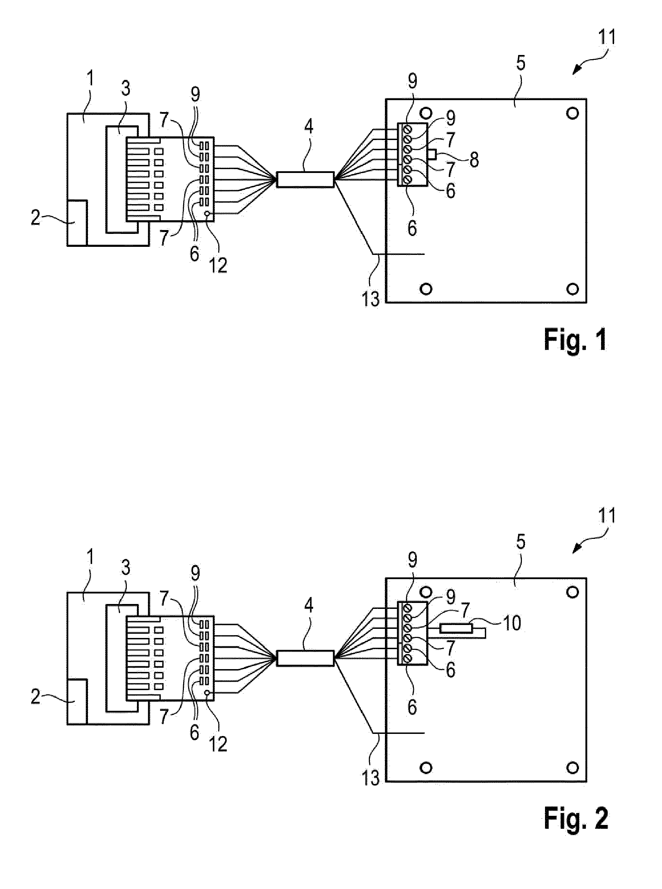

Im Folgenden werden anhand der Figuren 1 bis 3 drei Ausführungsbeispiele einer Anordnung 11 beschrieben. Gleiche bzw. funktional gleiche Bauteile sind stets mit denselben Bezugszeichen versehen.

Gemäß Figur 1 umfasst die Anordnung 11 ein Türstellglied 1, ausgebildet als Türschloss. Dieses Türstellglied 1 umfasst einen Aktor 2. Der Aktor 2 ist als Elektromagnet ausgebildet. Durch Bestromen des Aktors 2 kann das Türschloss verschlossen und geöffnet werden. Des Weiteren umfasst das Türstellglied 1 eine interne Steuereinheit 3.

Über ein Kabel 4 mit mehreren Leitungen ist das Türstellglied 1 mit einer externen Steuereinheit 5 verbunden.

Die interne Steuereinheit 3 und die externe Steuereinheit 5 weisen jeweils zwei über Leitungen verbundene Versorgungsanschlüsse 6, zwei über Anschlussleitungen verbundene weitere Anschlüsse 7 und zwei über Busleitungen verbundene Busanschlüsse 9 auf.

Innerhalb der externen Steuereinheit 5 sind die beiden weiteren Anschlüsse 7 über eine elektrisch leitende Brücke 8 miteinander kurzgeschlossen.

Durch den Kurzschluss der beiden weiteren Anschlüsse 7 erkennt die interne Steuereinheit 3, dass die externe Steuereinheit 5 im Bus-Betrieb arbeitet. Über die beiden Busanschlüsse 9 erhält die interne Steuereinheit 3 von der externen Steuereinheit 5 entsprechende digitale Signale. Basierend auf diesen digitalen Signalen schaltet die interne Steuereinheit 3 die Versorgungsanschlüsse 6 auf den Aktor 2. Infolgedessen wird der Aktor 2 in Abhängigkeit der digitalen Signale über die Versorgungsanschlüsse 6 bestromt oder stromlos geschaltet.

Im zweiten Ausführungsbeispiel gemäß Figur 2, sind die beiden weiteren Anschlüsse 7 in der externen Steuereinheit 5 über einen Widerstand 10 miteinander verbunden. Die interne Steuereinheit 3 erkennt die Verbindung der beiden weiteren Anschlüsse 7 über den Widerstand 10 und erkennt darin den Bus-Betrieb der externen Steuereinheit 5.

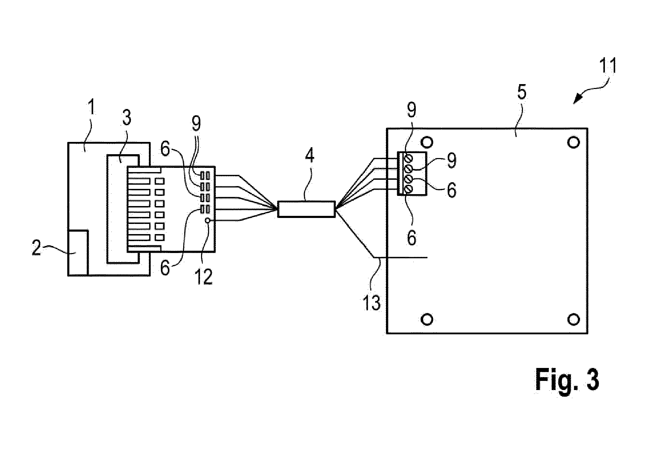

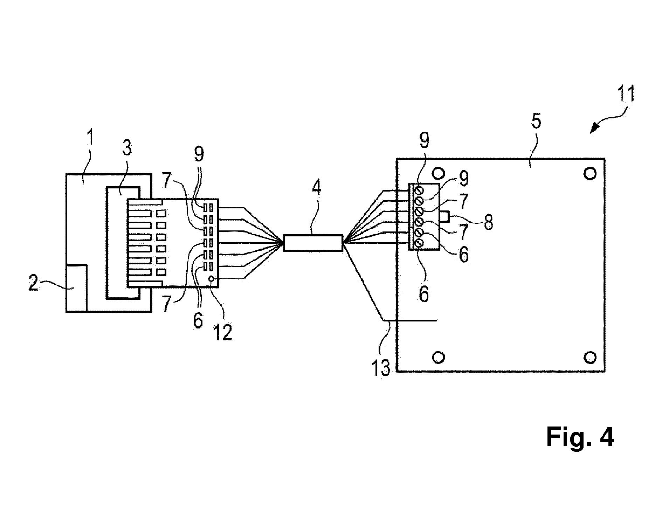

Figur 3 zeigt das dritte Ausführungsbeispiel der Anordnung 11. Im dritten Ausführungsbeispiel sind lediglich die beiden Busanschlüsse 9 und die beiden Versorgungsanschlüsse 6 vorgesehen. Über entsprechende Bustelegramme, gesendet über die Busanschlüsse 9, erkennt die interne Steuereinheit 3 den Bus-Betrieb der externen Steuereinheit 5.

Wenn in den drei Ausführungsbeispielen die interne Steuereinheit 3 keinen Bus-Betrieb der externen Steuereinheit 5 erkennt, so schaltet die interne Steuereinheit 3 auf den Analog-Betrieb. Im Analog-Betrieb werden die zwei Versorgungsanschlüsse 6 direkt auf den Aktor 2 durchgeschaltet, oder es erfolgt über eine Ansteuerleitung 13 und einen Ansteuereingang 12 eine analoge Ansteuerung des Aktors 2. Im Analog-Betrieb ist somit die interne Steuereinheit 3 nicht mehr für das Aktivieren und Deaktivieren des Aktors 2 verantwortlich. Im Analog-Betrieb wird der Aktor 2 bestromt, sobald an den Versorgungsanschlüssen 6 der entsprechende Versorgungsstrom anliegt, alternativ in Abhängigkeit der analogen Ansteuerleitung 13.

In allen drei Ausführungsbeispielen ist es möglich, auf die beiden Busanschlüsse 9 zu verzichten. In diesem Fall können die digitalen Signale für die Bussteuerung auf die Versorgungsanschlüsse 6 aufmoduliert werden.

### Bezugszeichenliste

- 1: Türstellglied
- 2: Aktor
- 3: interne Steuereinheit
- 4: Kabel
- 5: externe Steuereinheit
- 6: Versorgungsanschlüsse
- 7: weitere Anschlüsse
- 8: Brücke
- 9: Busanschlüsse
- 10: Widerstand
- 11: Anordnung
- 12: Ansteuereingang
- 13: Ansteuerleitung

## Patentansprüche

1. Türstellglied (1), umfassend:
- einen Aktor (2) zum Freigeben, Verriegeln, Schließen und/oder Öffnen einer Tür,
- zumindest zwei Versorgungsanschlüsse (6), über die der Aktor (2) bestrombar ist, und
- eine interne Steuereinheit (3), die dazu ausgebildet ist, beim Anschluss des Türstellgliedes (1) an eine externe Steuereinheit (5) einen Bus-Betrieb und einen Analog-Betrieb der externen Steuereinheit (5) zu erkennen,
- wobei die interne Steuereinheit (3) zum Umschalten des Türstellgliedes (1) zwischen dem Bus-Betrieb und dem Analog-Betrieb ausgebildet ist,
- wobei im Bus-Betrieb die interne Steuereinheit (3) zum Empfang eines digitalen Signals von der externen Steuereinheit (5) und zum Bestromen des Aktors (2) in Abhängigkeit des digitalen Signals ausgebildet ist, und
- wobei im Analog-Betrieb die interne Steuereinheit (3) zum ständigen Durchschalten der zwei Versorgungsanschlüsse (6) auf den Aktor (2) oder zum Aktivieren eines Ansteuereingangs (12) für den analogen Betrieb des Aktors (2) ausgebildet ist.

2. Türstellglied nach Anspruch 1, **gekennzeichnet durch** zwei weitere Anschlüsse (7) für elektrische Anschlussleitungen zwischen der externen Steuereinheit (6) und der internen Steuereinheit (3), wobei die interne Steuereinheit (3) zum Umschalten auf den Bus-Betrieb ausgebildet ist, wenn die zwei weiteren Anschlüsse (7) kurz geschlossen sind oder über einen Widerstand (10) miteinander verbunden sind.

3. Türstellglied nach einem der vorhergehenden Ansprüche, **dadurch gekennzeichnet, dass** die interne Steuereinheit (3) zum Empfang des digitalen Signals in Form eines Bustelegramms ausgebildet ist, wobei die interne Steuereinheit (3) bei Empfang des Bustelegramms auf den Bus-Betrieb umschaltet.

4. Türstellglied nach einem der vorhergehenden Ansprüche, **gekennzeichnet durch** zwei Busanschlüsse (9) für elektrische Busleitungen, wobei die interne Steuereinheit (3) zum Empfang des digitalen Signals über die Busanschlüsse (9) ausgebildet ist.

5. Türstellglied nach einem der vorhergehenden Ansprüche, **dadurch gekennzeichnet, dass** die interne Steuereinheit (3) zum Empfang des digitalen Signals in aufmodulierter Form über die Versorgungsanschlüsse (6) ausgebildet ist.

6. Türstellglied nach einem der vorhergehenden Ansprüche, **dadurch gekennzeichnet, dass** das Türstellglied (1) als Türöffner oder Türschloss oder Türhaftmagnet oder Türantrieb ausgebildet ist.

7. Anordnung für eine Tür, vorzugsweise zur Verwendung in oder an einem Gebäude, umfassend zumindest ein Türstellglied (1) nach einem der vorhergehenden Ansprüche und eine externe Steuereinheit (5).

8. Verfahren zur Montage eines Türstellgliedes (1) mit einem Aktor (2) zum Freigeben, Verriegeln, Schließen und/oder Öffnen einer Tür, umfassend die folgenden Schritte:
- Anschließen zumindest zweier Versorgungsanschlüsse (6) des Türstellgliedes (1), über die der Aktor (2) bestrombar ist,
- Anschließen einer internen Steuereinheit (3) des Türstellgliedes (1) an eine externe Steuereinheit (5),
- Erkennen eines Bus-Betriebs und eines Analog-Betriebs der externen Steuereinheit (5) mittels der internen Steuereinheit (3), und
- Umschalten des Türstellgliedes (1) zwischen dem Bus-Betrieb und dem Analog-Betrieb,
- wobei im Bus-Betrieb die interne Steuereinheit (3) ein digitales Signal empfängt und den Aktor (2) in Abhängigkeit des digitalen Signals bestromt, und
- wobei im Analog-Betrieb die interne Steuereinheit (3) die zwei Versorgungsanschlüsse (6) ständig auf den Aktor (2) durchschaltet, oder einen Ansteuereingang (12) für den analogen Betrieb des Aktors (2) aktiviert.
